# EUROPÄISCHE PATENTANMELDUNG

(11) **EP 0 945 406 A1**
(43) Veröffentlichungstag der Anmeldung: **29.09.1999**
(21) Anmeldenummer: 98810259.6
(22) Anmeldetag: 24.03.1998
(51) Int. Cl.: C02F 3/06, B01D 24/20, B01D 24/46

(54) **Becken mit Tauchkörpern und Spülvorrichtung zur biologischen Reinigung von Abwässern**

(71) Anmelder: CT Umwelttechnik AG, 8401 Winterthur (CH)
(72) Erfinder: Baggenstos, Martin, 8004 Zürich (CH); Kuhn, Hans, 3704 Krattigen (CH); Ryhiner, Gerhard, Dr., 8404 Winterthur (CH)
(74) Vertreter: Sulzer Management AG

(57) **Zusammenfassung**

Das Becken zum biologischen Reinigen von Abwässern enthält eine mit Biomasse bewachsene Trägerstruktur (2) und Mittel (3, 30, 5) zum periodischen Spülen der Trägerstruktur. Das Spülen wird mit mindestens einem Fluid, insbesondere mit Luft und/oder Wasser, durchgeführt. Die Trägerstruktur ist aus parallelen, weitgehend vertikalen Lagen (20) aufgebaut, die einen Fluiddurchtritt nur an deren unteren sowie oberen Enden zulassen. Unterhalb der Trägerstruktur ist ein bewegbares Spülorgan (3) für das Spülen der Trägerstruktur mit dem Fluid vorgesehen. Das Spülorgan umfasst mindestens eine in Richtung der Lagen orientierte Reihe von Düsen (30) für eine Fluidabgabe. Durch Verschieben des Spülorgans ist die gesamte Trägerstruktur spülbar.

## Beschreibung

Die Erfindung betrifft ein Becken zum biologischen Reinigen von Abwässern, eine Anlage mit einem solchen Becken und ein Verfahren zum Betreiben des Beckens.

Abwasserreinigungsanlagen, die seit zwei oder drei Jahrzehnten im Betrieb sind, müssen erneuert oder ersetzt werden. Die Becken solcher Anlagen sind in der Regel in einem Zustand, in dem sie noch weitere Jahrzehnte nutzbar wären. Allerdings sind die maschinellen und apparativen Komponenten zu ersetzen, und zwar so, dass aufgrund von Erkenntnissen, die in den vergangenen Jahren in der Abwassertechnik neu gewonnen worden sind, eine Erhöhung der Leistung der Anlage und eine Verbesserung der Qualität des gereinigten Wassers - möglichst ohne Vergrösserung des Energiebedarfs - erreichbar ist.

Es sind für die biologische Abwassereinigung belüffete Festbettreaktoren bekannt (z.B. EP-A 0 517 649 = P.6433), die einen das Festbett tragenden Zwischenboden enthalten, auf dem neben Belüftungsdüsen auch Düsen für eine Rückspülung angeordnet sind. Die Rückspülung wird periodisch im gesamten Festbett durchgeführt. Es werden dabei jeweils während einer kurzen Zeitdauer grosse Mengen an Spülluft und Spülwasser benötigt.

Es ist Aufgabe der Erfindung, ein Becken mit einer Trägerstruktur für Biomasse zu schaffen, wobei dieses Becken sich besonders gut dazu eignen soll, Becken bestehender Kläranlagen zu erneuern. Diese Aufgabe wird durch das in Anspruch 1 definierte Becken gelöst.

Das Becken zum biologischen Reinigen von Abwässern enthält eine mit Biomasse bewachsene Trägerstruktur und Mittel zum periodischen Spülen der Trägerstruktur. Das Spülen wird mit mindestens einem Fluid, insbesondere mit Luft und/oder Wasser, durchgeführt. Die Trägerstruktur ist aus parallelen, weitgehend vertikalen Lagen aufgebaut, die einen Fluiddurchtritt nur an deren unteren sowie oberen Enden zulassen. Unterhalb der Trägerstruktur ist ein bewegbares Spülorgan für das Spülen der Trägerstruktur mit dem Fluid vorgesehen. Das Spülorgan umfasst mindestens eine in Richtung der Lagen orientierte Reihe von Düsen für eine Fluidabgabe. Durch Verschieben des Spülorgans ist die gesamte Trägerstruktur spülbar.

Die abhängigen Ansprüche 2 bis 6 betreffen vorteilhafte Ausführungsformen des erfindungsgemässen Beckens. Gegenstand des Anspruchs 7 ist eine Anlage mit einem erfindungsgemässen Becken. Die Verfahrensansprüche 8 bis 10 beziehen sich auf das Betreiben des erfindungsgemässen Beckens.

Im erfindungsgemässen Becken wird das Spülen lokal in jeweils einem kleinen Bereich der Trägerstruktur durchgeführt. In der Regel wird anschliessend an das Spülen an einer Stelle das Spülen an einer benachbarten Stelle ohne einen zeitlichen Unterbruch fortgesetzt. Dank dieser Vorgehensweise werden weit kleinere Fluidpumpen als bei den älteren Festbettreaktoren benötigt, und die für den Spülbetrieb erforderliche Energie kann vorteilhafterweise kontinuierlich aus dem elektrischen Netz bezogen werden.

Nachfolgend wird die Erfindung anhand der Zeichnungen erläutert. Es zeigen:
- Fig. 1: ein Schrägbild zu einem erfindungsgemässen Becken mit rechteckigem Grundriss, dessen in Bewegungsrichtung des Spülorgans liegende Seite viel länger als die kurze Seite ist,
- Fig. 2: einen Querschnitt durch ein Becken, dessen Grundriss weitgehend quadratisch ist,
- Fig. 3: einen Querschnitt durch ein ringförmiges Becken, das ein Klärbecken umgibt und
- Fig. 4: einen Querschnitt durch ein Becken, in dem das Spülorgan als Pendelkopf bewegbar ist.

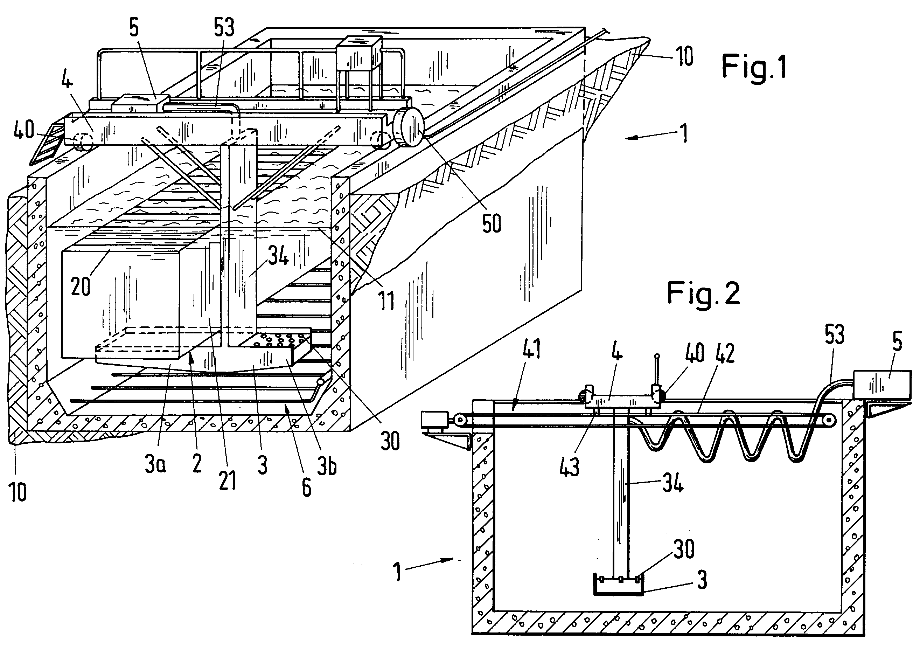

Das in einem Boden 10 angeordnete Becken 1 der Fig.1 umfasst folgende Komponenten: Eine Trägerstruktur 2 für eine Biomasse, mit parallelen vertikalen Lagen 20, deren schmalen vertikalen Seiten von einer Wand 21 abgeschlossen sind; ein Spülorgan 3, das an einer auf Rädern 40 bewegbaren Brücke 4 über ein Verbindungsstück 34 angebracht ist; eine auf der Brücke 4 angeordnete Fluidpumpe 5, aus der über eine Leitung 53 ein Fluid, insbesondere Luft oder Wasser, Fluiddüsen 30 des Spülorgans 3 zuführbar ist; eine Kabelrolle 50 für eine elektrische Energieversorgung der Fluidpumpe 5; ferner ein Belüftungssystem 6. Das Spülorgan 3 umfasst zwei Flügel 3a und 3b, die einen stabilen, die Fluiddüsen 30 tragenden Spülbalken bilden. Das zu behandelnde Wasser ist mit seinem Flüssigkeitsspiegel 11 angedeutet. Die Fluidpumpe 5 ist ein Gebläse oder eine Flüssigkeitspumpe. Es können auch zwei Fluidpumpen 5 eingesetzt werden, eine für Luft und die andere für Wasser.

Im Becken 1 sind zwei Gruppen von Trägerstrukturen 2 angeordnet, jeweils eine über den beiden Flügeln 3a und 3b des Spülorgans 3, wobei nur die über dem Flügel 3a liegende Gruppe abgebildet ist. Das Verbindungsstück 34 zum Spülorgan 3 ist längs einer Gasse zwischen den beiden Gruppen verschiebbar. Das Spülorgan 3 weist mindestens eine in Richtung der Lagen 20 orientierte Reihe von Fluiddüsen 30 auf (drei Reihen in Fig.1). Durch Verschieben des Spülorgans 3 ist die gesamte Trägerstruktur 2 spülbar.

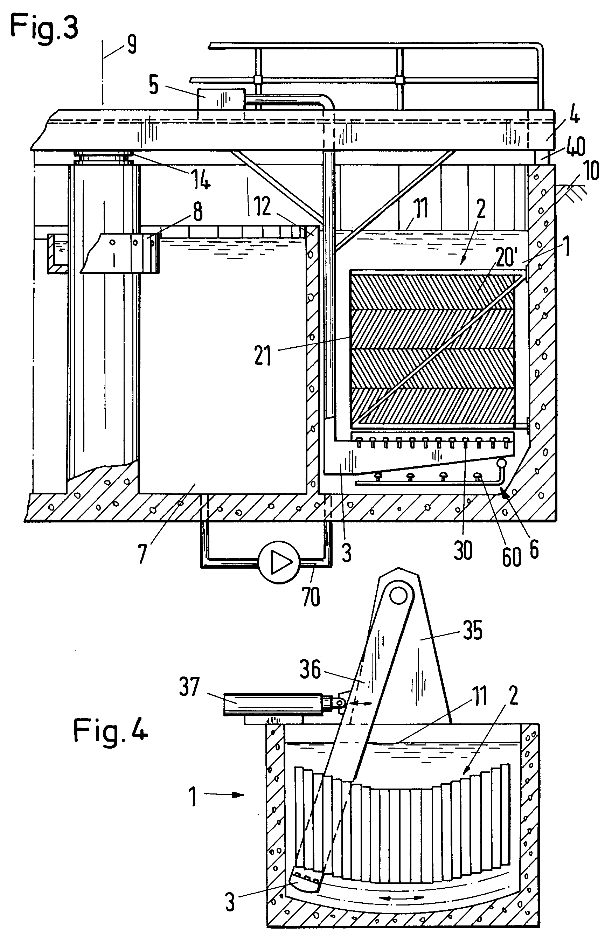

Die Lagen 20 der Trägerstruktur 2 lassen einen Fluiddurchtritt nur an den unteren und oberen Enden zu. Sie bestehen beispielsweise aus gewellten und sich berührenden Platten 20' (vgl. Fig.3). Die Richtung der Wellen einer Platte 20' verläuft quer zu jener der benachbarten Platte 20', so dass Kanäle, die sich offen kreuzen, durch die Platten 20' gebildet werden. Damit die Kanäle offen bleiben, muss beim Spülen immer ausreichend viel Biomasse von der Trägerstruktur 2 entfernt werden. Wird intermittierend während jeweils einiger Minuten mit rund 50 bis 300 m³/h m² Luft gespült, so bleiben erfahrungsgemäss die Kanäle offen.

Die Lagen 20 der Trägerstruktur 2 können auch aus rechteckigen, jeweils mit einer Schüttung gefüllten Schächten gebildet sein. Dabei sind die unteren Öffnungen der Schächte und die Anordnung der Fluiddüsen 30 so zueinander passend ausgebildet, dass jeweils mindestens ein Schacht gleichmässig spülbar ist.

Die Trägerstruktur 2 wird an jeder Stelle periodisch gespült und zwar in einem Bereich eines Streifens, dessen Breite durch die Anordnung der Fluiddüsen bestimmt ist. Die Periodendauer beträgt rund 0,3 bis 5 Tage.

Das Becken der Fig.1 ist für eine aerobe Abwasserreinigung vorgesehen. Unterhalb des Raums, in dem das Spülorgan 3 bewegt wird, sind zusätzliche Organe 60 (siehe Fig.3) des Systems 6 angeordnet, mit denen ein Sauerstoff enthaltendes Gas, in der Regel Luft, simultan in die gesamte Trägerstruktur 2 eintragbar ist. Es ist aber auch möglich, eine Biomasse auf der Trägerstruktur 2 vorzusehen, mit der eine anaerobe oder anoxische Abwasserreinigung (bei einem reduzierten Lufteintrag) durchführbar ist.

Durch die zugeführten Fluide und die Luft des Belüftungssystems 6 wird das zu behandelnde Wasser im Becken umgewälzt. Das Spülorgan 3 kann während Zeitintervallen, in denen ein Spülen nicht nötig ist, als Mittel verwendet werden, um die Umwälzung zu verbessern. Gleichzeitig kann auch das Belüftungssystem 6 unterstützt werden. Es kann auch ein System zur Zuführung eines Inertgases (z.B. Stickstoff) vorteilhaft sein, mit dem das Wasser umwälzbar ist.

Ist das Becken nicht langgestreckt wie im ersten Ausführungsbeispiel (Fig. 1), so ist ein Spülorgan 3, wie es anhand der Fig.2 vorgeschlagen wird, vorteilhafter: Eine Fluidpumpe 5 zur Speisung der Fluiddüsen 30 ist stationär am Rand des Beckens 1 angeordnet. Das Spülorgan 3 ist mittels eines Seilantriebs 41 verschiebbar, wobei wiederum eine Brücke 4, die auf am Beckenrand angeordneten Rädern 40 rollt, über Befestigungselemente 43 an einem Förderseil 42 angebracht ist. Die Fluidleitung 53, die von dem Gebläse bzw. Pumpe 5 zum Verbindungsstück 34 führt, ist ein flexibler Schlauch.

Das Becken 1 kann auch ringförmig ausgebildet sein: siehe Fig.3. Ein innerhalb einer Trennwand 12 liegendes Nachklärbecken 7 ist zentral angeordnet (Achse 9) und an das erste Becken 1 über nicht dargestellte Zuflussleitungen angeschlossen. In dem Nachklärbecken 7 wird aus behandeltem Abwasser mitgeführte Biomasse abgetrennt. Das geklärte Wasser kann über einen zentralen Ringkanal 8 abgezogen werden. Die Brücke 4 mit der mitgeführten Fluidpumpe 5 dreht sich zentral auf einem Lager 14 und auf Rädern 40 an der Peripherie des Beckens 1. Vorzugsweise besteht eine Rückführleitung 70 mit einer Pumpe 71 zwischen dem Nachklärbecken 7 und dem ersten Becken 1.

Mit den Organen 60 des Belüftungssystems 6 wird Luft in die Trägerstruktur 2 eingetragen. Für diesen Lufteintrag eignen sich Dom-, Kerzen- oder Platten-Belüftungssysteme.

Die biologische Reinigung im Becken 1 erfolgt ausser mit auf der Trägerstruktur 2 festsitzender Biomasse in der Regel auch mit im Wasser suspendierter Biomasse, die beim Spülen freigesetzt worden ist. Der Anteil der suspendierten Biomasse lässt sich vergrössern, indem mit der Pumpe 71 Biomasse aus dem Nachklärbecken 7 rückgeführt wird. Ist es vorgesehen, mit einem grossen Anteil an suspendierter Biomasse die Reinigung durchzuführen, so kann die spezifische Oberfläche der Trägerstruktur 2 entsprechend verkleinert werden.

Fig. 4 zeigt ein als Pendelkopf ausgebildetes Spülorgan 3, das Teil einer Einrichtung ist, mit der die Verschiebung des Spülorgans 3 unter der Trägerstruktur 2 in Form einer Pendelbewegung ausgeführt wird. Diese Einrichtung umfasst einen Ständer 35, einen Pendelarm 36, über den das Spülfluid in das Spülorgan 3 zuführbar ist, und einen hydraulischen oder pneumatischen Zylinder zum Antreiben der Pendelbewegung. Es handelt sich hier ähnlich wie beim Ausführungsbeispiel in Fig.2 um ein relativ kleines Becken 1. Die Trägerstruktur 2 wird mit Vorteil auch mit dem Spülorgan 2 belüftet, dem somit neben der Spülfunktion auch eine Belüftungsfunktion zukommt, so dass auf ein Belüftungssystem 6 verzichtet werden kann.

## Patentansprüche

1. Becken zum biologischen Reinigen von Abwässern, mit auf einer Trägerstruktur (2) wachsender Biomasse und Mitteln (3, 30, 5) zum periodischen Spülen der Trägerstruktur mit mindestens einem Fluid, insbesondere mit Luft und/oder Wasser, wobei
a) die Trägerstruktur aus parallelen, weitgehend vertikalen Lagen (20) aufgebaut ist, die einen Fluiddurchtritt nur an deren unteren sowie oberen Enden zulassen, und
b) unterhalb der Trägerstruktur ein bewegbares Spülorgan (3), das für das Spülen der Trägerstruktur mit dem Fluid vorgesehen ist und das mindestens eine in Richtung der Lagen orientierte Reihe von Düsen (30) für eine Fluidabgabe umfasst, so dass durch Verschieben des Spülorgans die gesamte Trägerstruktur spülbar ist.

2. Becken nach Anspruch 1, dadurch gekennzeichnet, dass die Lagen (20) der Trägerstruktur aus gewellten Platten bestehen, wobei benachbarte Platten jeweils sich offen kreuzende Kanäle bilden.

3. Becken nach Anspruch 1, dadurch gekennzeichnet, dass die Lagen (20) der Trägerstruktur aus rechteckigen, jeweils mit einer Schüttung gefüllten Schächten gebildet sind, und dass die unteren Öffnungen der Schächte und die Anordnung der Fluiddüsen so zueinander passend ausgebildet sind, dass jeweils mindestens ein Schacht gleichmässig spülbar ist.

4. Becken nach einem der Ansprüche 1 bis 3, dadurch gekennzeichnet, dass die Biomasse für eine aerobe Abwasserreinigung vorgesehen ist, wobei unterhalb eines Raums, der für das Spülorgan (3) vorgesehen ist, zusätzliche Organe (60) für einen simultanen Eintrag eines Sauerstoff enthaltenden Gases in die gesamte Trägerstruktur (2) angeordnet sind, oder dass die Biomasse für eine anaerobe oder anoxische Abwasserreinigung vorgesehen ist.

5. Becken nach einem der Ansprüche 1 bis 4, dadurch gekennzeichnet, dass das Spülorgan (3) an einer auf Rädern (40) fahrbaren Brücke (4) angebracht ist, deren Räder auf Rollflächen am oberen Beckenrand bewegbar sind, und dass mindestens eine Fluidpumpe (5), insbesondere ein Gebläse oder eine Flüssigkeitspumpe, zur Speisung der Fluiddüsen (30) auf der Brücke angeordnet ist, wobei die Fluidpumpe oder die Fluidpumpen mit dem Spülorgan, nämlich einem stabilen, die Fluiddüsen tragenden Spülbalken (3a, 3b), verbunden sind.

6. Becken nach einem der Ansprüche 1 bis 4, dadurch gekennzeichnet, dass eine Fluidpumpe (5) zur Speisung der Fluiddüsen (30) stationär angeordnet ist und dass das Spülorgan (3) mittels eines Seilantriebs (41) verschiebbar ist oder das Spülorgan Teil einer Einrichtung (35, 36, 37) ist, mit der die Verschiebung mittels einer Pendelbewegung ausführbar ist.

7. Anlage mit einem ersten, Biomasse enthaltenden Becken gemäss einem der Ansprüche 1 bis 6, dadurch gekennzeichnet, dass an das erste Becken (1) ein Nachklärbecken (7) angeschlossen ist, in dem mitgeführte Biomasse aus dem behandelten Abwasser abtrennbar ist, und dass vorzugsweise eine Rückführleitung (70) zwischen dem Nachklärbecken und dem ersten Becken besteht.

8. Verfahren zum Betreiben eines Biomasse enthaltenden Beckens (1) gemäss einem der Ansprüche 1 bis 6, dadurch gekennzeichnet, dass die Trägerstruktur (2) an jeder Stelle periodisch und im Bereich eines Streifens, dessen Breite durch die Anordnung der Fluiddüsen (30) bestimmt ist, während einiger Minuten mit rund 50 bis 300 m³/h m² Luft gespült wird.

9. Verfahren nach Anspruch 8, dadurch gekennzeichnet, dass die Periodendauer für die Spülung rund 0,3 bis 5 Tage beträgt.

10. Verfahren nach Anspruch 8 oder 9, dadurch gekennzeichnet, dass die biologische Reinigung im Becken (1) mit auf der Trägerstruktur (2) festsitzender und mit im Wasser suspendierter Biomasse durchgeführt wird, wobei eine Rückführung von Biomasse aus einem Nachklärbecken (7) vorgesehen sein kann.
